# EUROPÄISCHE PATENTSCHRIFT

(11) **EP 0 713 041 B1**
(45) Veröffentlichungstag und Bekanntmachung des Hinweises auf die Patenterteilung: **29.12.1997**
(21) Anmeldenummer: 95115671.0
(22) Anmeldetag: 05.10.1995
(51) Int. Cl.: F16L 11/15, F16L 31/00, B21C 37/12, F16L 9/16

(54) **Anschlussende eines Leitungselementes**
End of tube element
Extrémité d'un élément tubulaire

(30) Priorität: 03.11.1994 DE 4439218
(43) Veröffentlichungstag der Anmeldung: 22.05.1996
(73) Patentinhaber: Witzenmann GmbH Metallschlauch-Fabrik Pforzheim, D-75175 Pforzheim (DE)
(72) Erfinder: Paulig, Gerd, Dr., D-75181 Pforzheim (DE); Merkowski, Eduard, D-75181 Pforzheim (DE); Mischon, Rudolf, D-75196 Remchingen-Nöttingen (DE); Bantscheff, Richard, D-75233 Tiefenbronn (DE)
(74) Vertreter: Lemcke, Rupert, Dipl.-Ing.

(56) Entgegenhaltungen:
- DE-A- 2 645 946
- DE-A- 3 329 178
- DE-U- 9 406 824
- US-A- 4 063 355

## Beschreibung

Die Erfindung betrifft ein Anschlußende eines Leitungselementes aus Metall in Form eines Schlauches oder Balges mit schraubengangförmig umlaufender Wellung, der von einem Schlauch oder Balg größerer Länge durch Strahlschneiden abgetrennt ist.

Ein derartiges Anschlußende ist durch das Dokument DE-U- 9 406 824 bekannt.

Derartige Schläuche oder Bälge können aus einem nahtlos gezogenen Rohr durch Anbringung der schraubengangförmigen Wellung hergestellt sein. Dabei kann das Rohr ein- oder mehrwandig sein mit gegebenenfalls unterschiedlichen Materialien für die einzelnen Wandungen. Die Schläuche oder Bälge können aber auch durch schraubengangförmiges Wickeln eines ein- oder mehrlagigen, wellenförmig vorprofilierten Bandes hergestellt werden, wobei die Bandbreite wenigstens zwei benachbarte Wellenberge mit dazwischen liegendem Wellental bzw. zwei benachbarte Wellentäler mit dazwischen liegendem Wellenberg umfaßt. Auch hier kann bei mehrlagigen Bändern für die einzelnen Bandlagen unterschiedliches Material gewählt sein. Ebenso kommen auch solche gewickelten Schläuche oder Bälge in Frage, bei denen die Wellenberge innen durch ein sich axial erstreckendes Bandstück überdeckt sind. Dieses kann Bestandteil eines zusätzlich mitgewickelten Bandes sein, es kann jedoch auch mit dem Band zur Herstellung des Schlauches oder Balges einstückig verbunden sein, wie dies aus der DE 26 45 946 bekannt ist. Auf alle derartigen oder dazu ähnlichen Bauformen erstreckt sich der Gegenstand der Erfindung, ohne daß dies nachfolgend jedesmal im einzelnen angesprochen wird.

Die Schläuche oder Bälge und damit das Leitungselement haben üblicherweise Kreisquerschnitt. In Frage kommt jedoch auch je nach den Gegebenheiten des Verwendungszweckes beispielsweise ein ovaler oder polygonaler, also vieleckiger Querschnitt.

Wenn vorstehend und nachfolgend von Wellenbergen und Wellentälern gesprochen wird, so bezieht sich dies auf die Betrachtung des Leitungselementes von außen. Danach definieren die Wellenberge den Außenquerschnitt des Leitungselementes, während die Wellentäler die lichte Weite des Leitungselementes bestimmen.

Bei Leitungselementen der in Rede stehenden Art können nun die Enden zur Verbindung mit Anschlußteilen und dergleichen nicht einfach dadurch hergestellt werden, daß das Leitungselement senkrecht zu seiner Achse vom längeren Vormaterial abgeschnitten wird. Ein solcher üblicherweise durch eine Kreis- oder Bandsäge durchgeführter Schnitt führt nämlich über den Umfang des Leitungselement gesehen zu einer mehr oder weniger offenen Welle, also zu einer unrunden bzw. nicht der Querschnittsform des Leitungselementes entsprechenden Stirnkante. Daher bedarf es hier besonderer Anschlußtechniken zur Verbindung des Endes des Leitungselementes mit Anschlußteilen. Diese Techniken sind nicht nur aufwendig und teuer sondern werden üblicherweise auch nur von den solche Leitungselemente liefernden Spezialbetrieben beherrscht, so daß also nicht die Möglichkeit besteht, lediglich abgetrennte Leitungselemente an weiterverarbeitende Betriebe zu liefern.

Darüber hinaus entsteht bei dem beschriebenen Trennvorgang eine ungleiche, gratbehaftete Schnittkante, die erst noch durch Entgraten gesäubert werden muß. Auch müssen die beim Sägen sowie beim Entgraten anfallenden Späne entfernt werden, so daß ein nachträgliches Reinigen erforderlich ist.

Die geschilderten Probleme werden besonders gravierend bei der Herstellung von mehrlagigen Leitungselementen, da die mehreren Lagen durch den Trennvorgang an der Schnittstelle noch lokal auseinander gerissen werden können.

Aufgabe der Erfindung ist es daher, die Anschlußenden eines Leitungselementes der eingangs genannten Art so herzustellen und zu gestalten, daß sie sich leicht durch Verbindung mit Anschlußteilen oder dergleichen auch in nicht spezialisierten Betrieben weiterverarbeiten lassen.

Diese Aufgabe ist erfindungsgemäß dadurch gelöst, daß der Trennvorgang entlang dem Grund eines Wellentales oder dem Kamm eines Wellenberges über den größten Umfangsteil des Leitungselementes sowie im Anschluß daran abweichend von dieser Richtung des Schnittlinienverlaufes unter Überquerung des benachbarten Wellenberges bzw. Wellentales vollzogen ist.

Diese erfindungsgemäßen Maßnahmen haben die Wirkung, daß nunmehr der Trennvorgang als solcher abweichend von einem geraden, senkrecht zur Achse des Leitungselementes gelegenen Verlauf ausgeführt werden kann, womit ein weitgehendes Wandern der Schnittlinie über die zwischen Wellentälern und Wellenbergen gelegenen Flanken des Schlauch- bzw. Balgprofils vermieden ist bis auf einen äußerst kurzen Teil des Trennvorgangs, dessen Schnittrichtung von der übrigen Schnittrichtung entlang einem Wellental bzw. Wellenberg abweicht.

Was die Reihenfolge innerhalb des Trennvorganges betrifft, so ist es gleichgültig, ob dieser zunächst entlang einem Wellental bzw. Wellenberg und danach unter Überquerung eines Wellenberges bzw. Wellentales oder in umgekehrter Reihenfolge durchgeführt wird. Es könnte noch in Erwägung gezogen werden, den größten Teil des Trennvorganges entlang einer der Wellenflanken durchzuführen. Dies wäre grundsätzlich ebenso gut möglich, würde jedoch zu einer komplizierteren Handhabung der Strahlschneidvorrichtung oder zu einer schlechteren Qualität der Schnittkante führen.

Wenn auch für das Strahlschneiden grundsätzlich sämtliche in diese Gattung fallende Schneidverfahren wie beispielsweise das Schneiden mit einem Wasserstrahl in Frage kommen, hat es sich doch als zweckmäßig erwiesen, daß der Trennvorgang durch Laserstrahlschneiden ausgeführt ist.

Was die von dem größten Teil des Schnittlinienverlaufes abweichende Schnittrichtung zur Überquerung des benachbarten Wellenberges bzw. Wellentales betrifft, so kann diese einen Winkel im Bereich von 0° bis 90° mit der Achse des Leitungselementes einschließen, wobei es sich als vorteilhaft erwiesen hat, daß die abweichende Schnittrichtung einen Winkel im Bereich von 30 bis 60° mit der Achse des Leitungselementes einschließt. Es kann aber auch zweckmäßig sein, daß die abweichende Schnittrichtung zur Überquerung des benachbarten Wellenberges bzw. Wellentales einen Winkel im Bereich von 90° mit dem entlang einem Wellental oder Wellenberg gegebenen Schnittlinienverlauf einschließt.

Vorteilhaft ist es, daß das Ende des Leitungselementes wenigstens bis auf die Bildung einer quer zur Achse des Leitungselementes gelegenen Abschlußebene axial auf Block gestaucht ist. Wird das Ende des Leitungselementes in dieser erfindungsgemäßen Weise gestaucht, so entsteht eine glatte stirnseitige Ringfläche des Leitungselementes, über die dieses ohne besondere Schwierigkeiten und damit auch in weniger spezialisierten Betrieben mit weiterführenden Bauteilen verbunden werden kann. Wenn das Ende des Leitungselementes über wenigstens den Teil einer Welle bis zu mehreren Wellen axial auf Block gestaucht wird, ergibt sich an den Enden des Leitungselementes genügend Material, um die Schweißverbindung mit weiterführenden Teilen problemlos auszuführen. Ausreichend wird es in diesem Zusammenhang sein, wenn das Ende des Leitungselementes über bis zu drei Wellen axial auf Block gestaucht ist. Dabei können, wie bereits angedeutet, sowohl am Anfang als auch am Ende des Blockes Wellen nur teilweise erfaßt sein je nachdem, wie sich dies für die Positionierung und die gewünschte Dicke des Blockes als zweckenmäßig erweist.

Gerade für mehrlagige oder aus einem Band gewickelte Leitungselemente kann es von Vorteil sein, daß das Leitungselement vor dem Strahlschneiden entlang der im Wellental oder auf dem Wellenberg verlaufenden Schnittlinie mit einer durchgehenden oder nach Art einer Steppnaht unterbrochenen Schweißnaht versehen ist. Diese Schweißnaht kann auf der Schnittlinie angeordnet sein und würde dann beim Abtrennen in ihrer Mitte durchtrennt. Die Schweißnaht kann aber auch in zwei zueinander parallelen Reihen auf je einer Seite der Schnittlinie angeordnet sein. Die Schweißnaht sorgt dafür, daß gerade auch für den Stauchvorgang sowie für die Weiterverarbeitung des Leitungselementes die mehreren Lagen in ihrer dichten Packung beieinander gehalten sind.

Auch für die Herstellung der genannten Schweißnaht kann eine Laserschweißeinrichtung verwendet werden, so daß im Ergebnis die gleiche Vorrichtung sowohl für das Herstellen der Schweißnaht als auch für die Ausführung des Trennvorganges eingesetzt werden kann.

Bisher ist stillschweigend davon ausgegangen worden, daß die schraubengangförmige Wellung des Leitungselementes eingängig ist. Es gibt jedoch auch zwei- oder mehrgängig schraubengangförmig gewellte Schläuche oder Bälge, die für bestimmte Einsatzzwecke in Frage kommen können. Dazu kann entsprechend der Erfindung vorgesehen sein, daß bei Leitungselementen in Form zwei- oder mehrgängig schraubengangförmig gewellter Schläuche oder Bälge durch die abweichende Schnittrichtung entsprechend zwei oder mehr benachbarte Wellenberge mit wenigstens einem dazwischen liegenden Wellental bzw. zwei oder mehr benachbarte Wellentäler mit wenigstens einem dazwischen liegenden Wellenberg überquert werden. Um dabei den Abschnitt der abweichenden Schnittrichtung nicht zu groß bzw. lang werden zu lassen, kann es besonders zweckmäßig sein, daß der entlang des Wellentales oder Wellenberges angeordnete Schnittlinienverlauf über den Umfang des Leitungselementes in mehrere Abschnitte mit jeweils dazwischen liegender Überquerung eines Wellenberges bzw. Wellentales aufgeteilt ist. Hier läuft also beispielsweise die Trennlinie über einen Teil des Umfangs des Leitungselementes in einem Wellental, überquert dann den benachbarten Wellenberg, läuft danach wieder über einen Umfangsteil entlang des damit erreichten Wellentales usw.

Weitere Merkmale und Einzelheiten der Erfindung ergeben sich aus der nachfolgenden Beschreibung einer Ausführungsform, die auf der Zeichnung dargestellt ist. In der Zeichnung zeigen:
- Figur 1: ein Leitungselement in Form eines eingängig schraubengangförmig gewellten Schlauches oder Balges, teilweise geschnitten;
- Figur 2: eine Ausschnittvergrößerung zum rechten Ende des Leitungselementes gemäß Figur 1 und

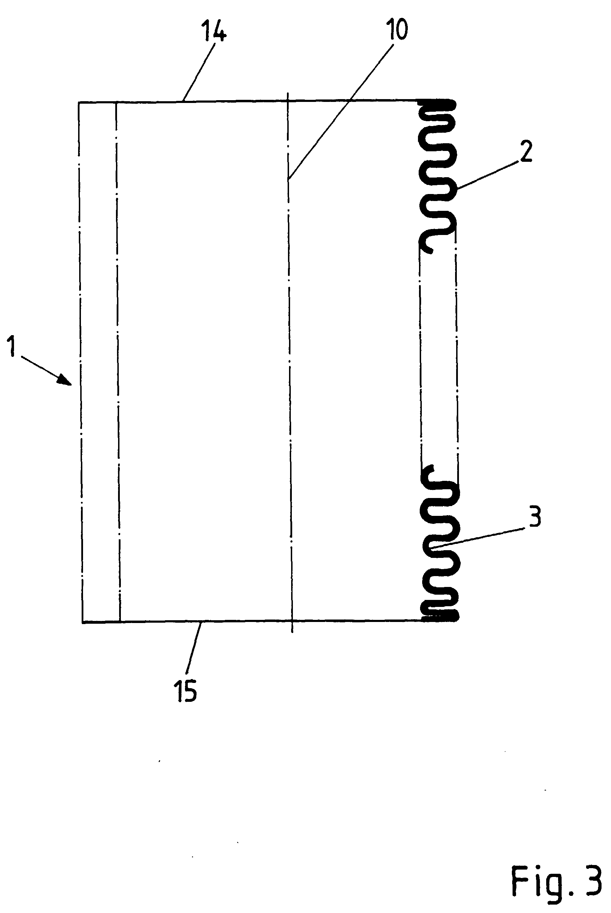

- Figur 3: die vereinfachte Darstellung eines an seinen Enden fertig bearbeiteten Leitungselementes.

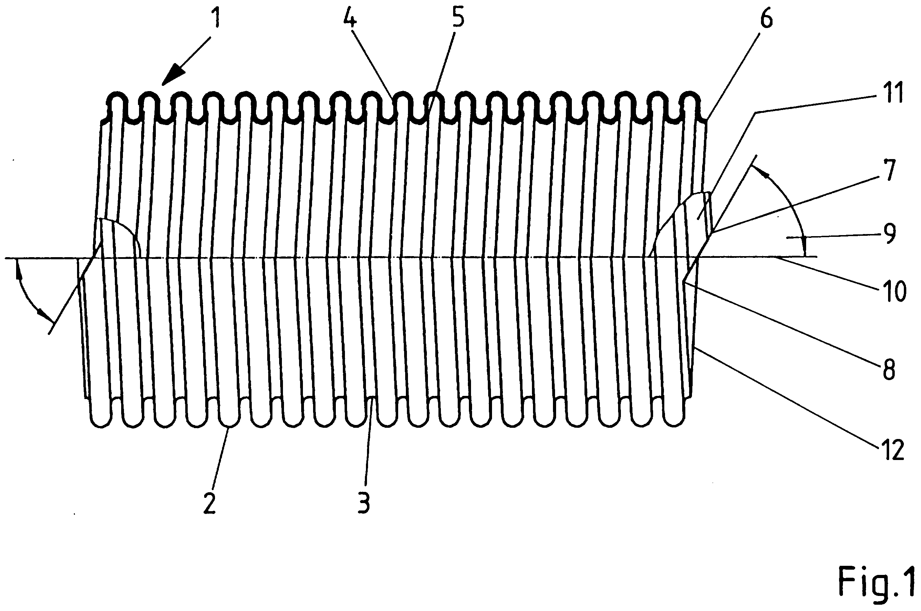

Figur 1 zeigt ein schraubengangförmig gewelltes Leitungselement 1 mit Wellenbergen 2 und Wellentälern 3. Dieses Leitungselement ist vierwandig durch schraubengangförmiges Wickeln eines entsprechend vorprofilierten Bandes hergestellt. Bezogen auf Figur 1 ist dieses Band von links nach rechts gewickelt und hat entsprechend eine von außen sichtbare rückwärtige Kante 4 und eine von innen sichtbare Vorderkante 5.

Zur Abtrennung des Leitungselementes 1 von entsprechendem längerem Schlauch- bzw. Balgmaterial ist ein schneidender Laserstrahl durch den Grund eines Wellentales 6 beispielsweise an der Stelle 7 beginnend dem Verlauf des Tales folgend bis zur Stelle 8 geführt, von wo aus er schließlich in Abweichung von dieser Schnittrichtung unter einem Winkel 9 zur Achse 10 des Leitungselementes 1 unter Überquerung des Wellenberges 11 zur Stelle 7 zurückgeführt ist.

Auf diese Weise kann ein im wesentlichen zum Leitungselement 1 gerichteter Laserstrahl verwendet werden, für dessen Vorrichtung es nur wesentlich ist, daß der Strahl entlang dem dargestellten Schnittlinienverlauf gegebenenfalls auch radial zum Leitungselement 1 bewegt wird, was üblicherweise durch eine numerische Steuerung geschieht.

Durch die beschriebene Ausbildung der Schnittlinie ergibt sich im vorliegenden Falle eine im wesentlichen kreisförmig verlaufende Stirnkante 12, die nur auf einem kurzen Stück durch sich davon ausgehend radial nach außen erstreckende Teile unterbrochen ist, welche beim anschließenden Stauchen des Endes des Leitungselementes nahe nebeneinander zu liegen kommen.

Der Winkel 9 hat im vorliegenden Falle eine Größe im Bereich von 60°. Hier können je nach einzelnen Gegebenheiten auch andere Winkel zwischen 0 und 90° in Frage kommen.

Was das linke Ende des Leitungselementes 1 betrifft, so ist dieses in entsprechender Weise hergestellt. Werden Leitungselemente 1 von links nach rechts fortschreitend von längerem Ausgangsmaterial abgetrennt, dann ist das linke Ende des Leitungselementes 1 praktisch bei der Abtrennung des vorhergehenden Leitungselementes am Ausgangsmaterial stehengeblieben.

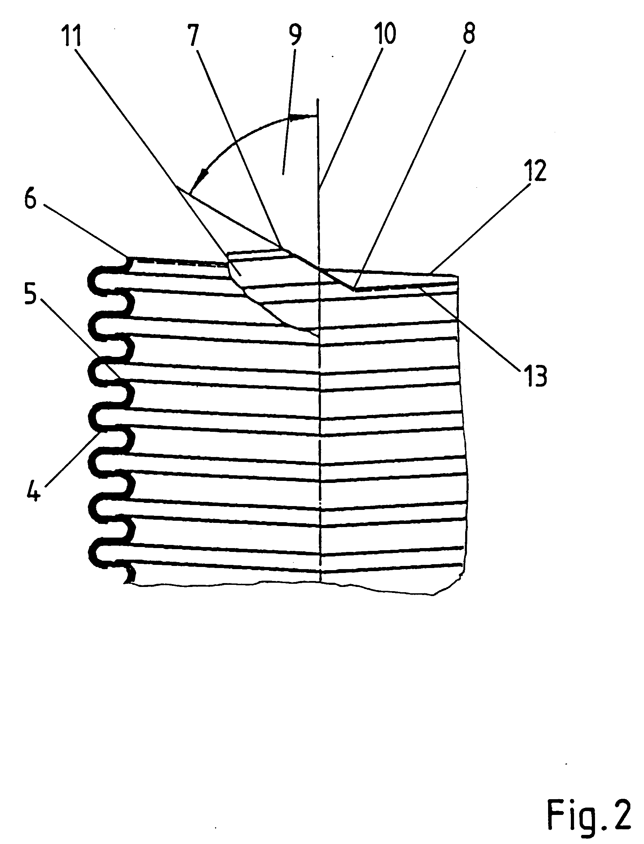

Figur 2 zeigt das rechte Ende des Leitungselementes 1 gemäß Figur 1 noch einmal in ausschnittsweiser Vergrößerung. Dort ist auch ersichtlich, daß die die Stirnkante 12 bildende Schnittlinie von einer vorher hergestellten Steppnaht 13 aus Schweißstellen begleitet sein kann.

Das Leitungselement gemäß Figur 1 und 2 wird nach dem Abtrennen an seinen Enden axial gestaucht, um ihm quer zur Achse 10 des Leitungselementes gelegene Abschlußebenen 14, 15 zu geben. Dabei können durch den Stauchvorgang endständig ein oder mehrere Wellen 2 ganz oder teilweise erfaßt werden, so daß an den Enden des Leitungselementes genügend Material zum Anschweißen an weiterführende Bauteile vorhanden ist. Im einfachsten Falle kann es bereits genügen, die Stauchung nur für den Bereich um die Stellen 7 und 8 vorzunehmen.

## Patentansprüche

1. Anschlußende eines Leitungselementes (1) aus Metall in Form eines Schlauches oder Balges mit schraubengangförmig umlaufender Wellung, der von einem Schlauch oder Balg größerer Länge durch Strahlschneiden abgetrennt ist,
dadurch gekennzeichnet,
daß der Trennvorgang entlang dem Grund eines Wellentales (6) oder dem Kamm eines Wellenberges über den größten Umfangsteil des Leitungselementes (1) sowie im Anschluß daran abweichend von dieser Richtung des Schnittlinienverlaufes unter Überquerung des benachbarten Wellenberges (11) bzw. Wellentales vollzogen ist.

2. Anschlußende nach Anspruch 1,
dadurch gekennzeichnet,
daß der Trennvorgang durch Laserstrahlschneiden ausgeführt ist.

3. Anschlußende nach Anspruch 1,
dadurch gekennzeichnet,
daß die abweichende Schnittrichtung zur Überquerung des benachbarten Wellenberges (11) bzw. Wellentales einen Winkel (9) im Bereich von 0° bis 90° mit der Achse (10) des Leitungselementes einschließt.

4. Anschlußende nach Anspruch 3,
dadurch gekennzeichnet,
daß die abweichende Schnittrichtung einen Winkel (9) im Bereich von 30 bis 60° mit der Achse (10) des Leitungselementes (1) einschließt.

5. Anschlußende nach Anspruch 1,
dadurch gekennzeichnet,
daß die abweichende Schnittrichtung zur Überquerung des benachbarten Berges (11) bzw. Wellentales einen Winkel im Bereich von 90° mit dem entlang einem Wellental (6) oder Wellenberg gegebenen Schnittlinienverlauf einschließt.

6. Anschlußende nach einem oder mehreren der Ansprüche 1 bis 5,
dadurch gekennzeichnet,
daß das Ende des Leitungselementes nach dem Trennvorgang wenigstens bis auf die Bildung einer quer zur Achse (10) des Leitungselementes (1) gelegenen Abschlußebene (14, 15) axial auf Block gestaucht ist.

7. Anschlußende nach Anspruch 6,
dadurch gekennzeichnet,
daß das Ende des Leitungselementes (1) über wenigstens den Teil einer Welle (2) bis zu mehreren Wellen (2) axial auf Block gestaucht ist.

8. Anschlußende nach Anspruch 7,
dadurch gekennzeichnet,
daß das Ende des Leitungselementes (1) über bis zu drei Wellen (2) axial auf Block gestaucht ist.

9. Anschlußende nach einem oder mehreren der Ansprüche 1 bis 8,
dadurch gekennzeichnet,
daß das Leitungselement (1) vor dem Strahlschneiden entlang der im Wellental (6) oder auf dem Wellenberg verlaufenden Schnittlinie mit einer durchgehenden oder nach Art einer Steppnaht (13) unterbrochenen Schweißnaht versehen ist.

10. Anschlußende nach Anspruch 9,
dadurch gekennzeichnet,
daß die Schweißnaht (13) auf der Schnittlinie angeordnet ist.

11. Anschlußende nach Anspruch 9,
dadurch gekennzeichnet,
daß die Schweißnaht (13) in zwei zueinander parallelen Reihen je auf einer Seite der Schnittlinie angeordnet ist.

12. Anschlußende nach einem oder mehreren der Ansprüche 9 bis 11,
dadurch gekennzeichnet,
daß die Schweißnaht (13) durch eine Laserschweißeinrichtung gebildet ist.

13. Anschlußende nach einem oder mehreren der Ansprüche 1 bis 12,
dadurch gekennzeichnet,
daß bei Leitungselementen in Form zwei- oder mehrgängig schraubengangförmig gewellter Schläuche oder Bälge durch die abweichende Schnittrichtung entsprechend zwei oder mehr benachbarte Wellenberge mit wenigstens einem dazwischen liegendem Wellental bzw. zwei oder mehr benachbarte Wellentäler mit wenigstens einem dazwischen liegenden Wellenberg überquert sind.

14. Anschlußende nach Anspruch 13,
dadurch gekennzeichnet,
daß der entlang des Wellentales oder Wellenberges angeordnete Schnittlinienverlauf über den Umfang des Leitungselementes in mehrere Abschnitte mit jeweils dazwischen liegender Überquerung eines Wellenberges bzw. Wellentales aufgeteilt ist.

## Claims

1. Connection end of a conduit element (1) of metal in the form of a flexible tube or bellows with corrugations circulating like a screw thread, which is separated from a flexible tube or bellows of a greater length by means of beam cutting,
characterised in that the separation operation is performed along the bottom of a trough (6) or the crest of a peak over the greater circumferential part of the conduit element (1) and, subsequent thereto, in a direction which diverges from this direction of the cutting line path so as to cross the adjacent peak (11) or trough.

2. Connection end according to claim 1,
characterised in that the separation operation is carried out by means of laser beam cutting.

3. Connection end according to claim 1,
characterised in that the divergent cutting direction forms an angle (9) in the range from 0° to 90° with the axis (10) of the conduit element to cross the adjacent peak (11) or trough.

4. Connection end according to claim 3,
characterised in that the divergent cutting direction forms an angle (9) in the range from 30 to 60° with the axis (10) of the conduit element (1).

5. Connection end according to claim 1,
characterised in that the divergent cutting direction forms an angle in the range of 90° with the cutting line path along a trough (6) or peak to cross the adjacent peak (11) or trough.

6. Connection end according to one or more of claims 1 to 5,
characterised in that, following the separation operation, the end of the conduit element is axially gathered into a block at least until a terminating plane (14, 15) lying transversely to the axis (10) of the conduit element (1) is formed.

7. Connection end according to claim 6,
characterised in that the end of the conduit element (1) is axially gathered into a block over at least the part of a corrugation (2) up to a plurality of corrugations (2).

8. Connection end according to claim 7,
characterised in that the end of the conduit element (1) is axially gathered into a block over up to three corrugations (2).

9. Connection end according to one or more of claims 1 to 8,
characterised in that, before beam cutting, the conduit element (1) is provided with a continuous or an intermittent weld, like a stitch weld, along the cutting line extending in the trough (6) or on the peak.

10. Connection end according to claim 9,
characterised in that the weld (13) lies on the cutting line.

11. Connection end according to claim 9,
characterised in that the weld (13) lies in two parallel lines, one on each side of the cutting line.

12. Connection end according to one or more of claims 9 to 11,
characterised in that the weld (13) is formed by a laser welding device.

13. Connection end according to one or more of claims 1 to 12,
characterised in that, in the case of conduit elements in the form of flexible tubes or bellows corrugated like a double- or multi-start screw thread, two or more adjacent peaks with at least one trough lying in between, or two or more adjacent troughs with at least one peak lying in between are accordingly crossed by the divergent cutting direction.

14. Connection end according to claim 13,
characterised in that the cutting line path, which lies along the trough or peak, is divided over the circumference of the conduit into a plurality of sections with a peak or trough in each case being crossed in between.

## Revendications

1. Extrémité de raccordement d'un élément de conduite (1) en métal, en forme de tuyau ou de soufflet avec ondulation circulaire en forme de pas de vis, découpé dans un tuyau ou dans un soufflet de grande longueur par découpage par jet, **caractérisée en ce que** le processus de séparation est réalisé le long du fond d'un creux (6) ou le long du sommet d'une crête sur la plus grande partie du pourtour de l'élément de conduite (1) et après cela, en déviation de ce sens de la trajectoire de la ligne de découpe, en traversant la crête adjacente (11) ou le creux adjacent.

2. Extrémité de raccordement selon la revendication 1, **caractérisée en ce que** le processus de séparation est exécuté par découpage au rayon laser.

3. Extrémité de raccordement selon la revendication 1, **caractérisée en ce que** le sens de découpe déviant pour traverser la crête adjacente (11) ou le creux adjacent forme un angle (9) de l'ordre de 0° à 90° avec l'axe (10) de l'élément de conduite.

4. Extrémité de raccordement selon la revendication 3, **caractérisée en ce que** le sens de découpe déviant forme un angle (9) de l'ordre de 30 à 60° avec l'axe (10) de l'élément de conduite (1).

5. Extrémité de raccordement selon la revendication 1, **caractérisée en ce que** le sens de découpe déviant pour traverser la crête adjacente (11) ou le creux adjacent forme un angle de l'ordre de 90° par rapport à la trajectoire de la ligne de découpe située le long d'un creux (6) ou d'une crête.

6. Extrémité de raccordement selon l'une ou plusieurs des revendications 1 à 5, **caractérisée en ce que** l'extrémité de l'élément de conduite après le processus de séparation est refoulée axialement sur bloc au moins jusqu'à la formation d'un niveau de fermeture (14, 15) situé transversalement par rapport à l'axe (10) de l'élément de conduite (1).

7. Extrémité de raccordement selon la revendication 6, **caractérisée en ce que** l'extrémité de l'élément de conduite (1) est refoulée axialement sur bloc sur au moins une partie d'une ondulation (2) pour aller jusqu'à plusieurs ondulations (2).

8. Extrémité de raccordement selon la revendication 7, **caractérisée en ce que** l'extrémité de l'élément de conduite (1) est refoulée axialement sur bloc sur une distance allant jusqu'à trois ondulations (2).

9. Extrémité de raccordement selon l'une ou plusieurs des revendications 1 à 8, **caractérisée en ce que** l'élément de conduite (1) est muni, avant le découpage par rayon, d'une soudure continue ou d'une soudure semblable à une ligne à points interrompus (13) le long de la ligne de découpe située dans le creux (6) ou sur la crête.

10. Extrémité de raccordement selon la revendication 9, **caractérisée en ce que** la soudure (13) est placée sur la ligne de découpe.

11. Extrémité de raccordement selon la revendication 9, **caractérisée en ce que** la soudure (13) est disposée en deux rangées parallèles l'une par rapport à l'autre, respectivement sur un côté de la ligne de découpe.

12. Extrémité de raccordement selon l'une ou plusieurs des revendications 9 à 11, **caractérisée en ce que** la soudure (13) est formée par un dispositif de soudure au laser.

13. Extrémité de raccordement selon l'une ou plusieurs des revendications 1 à 12, **caractérisée en ce que**, dans le cas d'éléments de conduite en forme de tuyaux ou de soufflets, à deux filets ou à filets multiples, ondulés en forme de pas de vis, deux ou plusieurs crêtes adjacentes avec au moins un creux intermédiaire ou deux ou plusieurs creux adjacents avec au moins une crête intermédiaire sont traversés par le sens de découpe déviant.

14. Extrémité de raccordement selon la revendication 13, **caractérisée en ce que** la trajectoire de la ligne de découpe située le long du creux ou de la crête est répartie sur le pourtour de l'élément de conduite en plusieurs sections avec respectivement une traversée intermédiaire d'une crête ou d'un creux.
